(19) Europäisches Patentamt / European Patent Office / Office européen des brevets

(11) **EP 1 287 634 B1**

(12) **EUROPÄISCHE PATENTSCHRIFT**

(45) Veröffentlichungstag und Bekanntmachung des Hinweises auf die Patenterteilung:
**16.09.2009 Patentblatt 2009/38**

(51) Int Cl.:
*H04L 7/02* (2006.01)    *H04J 3/06* (2006.01)
*H04B 1/12* (2006.01)    *H04B 7/01* (2006.01)

(21) Anmeldenummer: **01943051.1**

(22) Anmeldetag: **10.05.2001**

(86) Internationale Anmeldenummer:
**PCT/DE2001/001776**

(87) Internationale Veröffentlichungsnummer:
**WO 2001/089137 (22.11.2001 Gazette 2001/47)**

(54) **RUNDFUNKEMPFÄNGER FÜR DEN EMPFANG VON DIGITALEN RUNDFUNKSIGNALEN UND VERFAHREN ZUM EMPFANG VON DIGITALEN RUNDFUNKSIGNALEN**

RADIO RECEIVER FOR RECEIVING DIGITAL RADIO SIGNALS AND METHOD FOR RECEIVING DIGITAL RADIO SIGNALS

RECEPTEUR DE RADIODIFFUSION DESTINE A LA RECEPTION DE SIGNAUX RADIO NUMERIQUES ET PROCEDE DE RECEPTION DE SIGNAUX RADIO NUMERIQUES

(84) Benannte Vertragsstaaten:
**CH DE GB LI SE**

(30) Priorität: **17.05.2000 DE 10024267**

(43) Veröffentlichungstag der Anmeldung:
**05.03.2003 Patentblatt 2003/10**

(73) Patentinhaber: **ROBERT BOSCH GMBH**
**70442 Stuttgart (DE)**

(72) Erfinder:
• **GIESKE, Kurt**
**31180 Giesen/Gross Förste (DE)**
• **NITSCHE, Gunnar**
**01099 Dresden (DE)**

(56) Entgegenhaltungen:
EP-A- 0 401 562    EP-A- 0 926 857
EP-A- 0 987 864    EP-A- 1 096 715
EP-A- 1 096 716    EP-A- 1 130 833
US-A- 6 061 410

• STRAUB A: "DIGITALE AUDIO-VERARBEITUNG" RADIO FERNSEHEN ELEKTRONIK, VEB VERLAG TECHNIK. BERLIN, DE, Bd. 42, Nr. 1, 1993, Seiten 13-16, XP000360962 ISSN: 1436-1574
• POLLET T ET AL: "SYNCHRONIZATION WITH DMT MODULATION" IEEE COMMUNICATIONS MAGAZINE, IEEE SERVICE CENTER. PISCATAWAY, N.J, US, Bd. 37, Nr. 4, April 1999 (1999-04), Seiten 80-86, XP000823991 ISSN: 0163-6804
• NOGAMI H ET AL: "A FREQUENCY AND TIMING PERIOD ACQUISITION TECHNIQUE FOR OFDM SYSTEMS" IEICE TRANSACTIONS ON COMMUNICATIONS, INSTITUTE OF ELECTRONICS INFORMATION AND COMM. ENG. TOKYO, JP, Bd. E79-B, Nr. 8, 8. August 1996 (1996-08-08), Seiten 1135-1146, XP000628654 ISSN: 0916-8516

**Beschreibung**

Stand der Technik

Die Erfindung geht aus von einem Rundfunkempfänger für den Empfang von digitalen Rundfunksignalen bzw. von einem Verfahren zum Empfang von digitalen Rundfunksignalen nach der Gattung der unabhängigen Patentansprüche.

Bei digitalen Rundfunksystemen für die drahtlose Übertragung wie DAB (Digital Audio Broadcasting) oder DRM (Digital Radio Mondial) wird im Sender eine Audioquelle mit einer Abtastrate, üblicherweise mit 48 kHz oder 24 kHz, abgetastet. Dabei wird Pulscodemodulation verwendet. Danach wird im Sender eine Quellencodierung zur Datenreduktion und eine Kanalcodierung für den Fehlerschutz durchgeführt. Die so entstandenen digitalen Rundfunksignale werden dann mittels einer Antenne zu den Empfängern versendet. Die Empfänger müssen mit dem Takt, mit dem die Sender arbeiten, die Audiosignale wiedergeben, sonst kann es unter Umständen zu hörbaren Fehlern kommen, da, wenn mit unterschiedlichen Takten in den Sendern und den Empfängern gearbeitet wird, entweder zuwenig oder zuviele Abtastwerte vorliegen. Es kann dabei zu Knackgeräuschen kommen. Um diese Taktregelung herzustellen, wird bei herkömmlichen Empfängern ein spannungsgesteuerter Oszillator verwendet, also ein Oszillator, der durch eine angelegte Spannung frequenzmäßig durchgestimmt wird.

Die ältere Europäische Patentanmeldung EP 1096716 A2 beschreibt eine Abtastratenumsetzung bei einem Über- oder Unterlaufen eines Puffers mittels einer Interpolations- bzw. Dezimationseinrichtung. Die ältere Europäische Patentanmeldung EP 1096715 A2 offenbart ebenfalls eine solche Abtastratenumsetzung in einem Rundfunkempfänger. Die Europäische Patentanmeldung EP 401562 A2 beschreibt eine Anordnung zur Umsetzung eines Signals mit einer ersten Abtastrate in ein Signal mit einer zweiten Abtastrate. Dabei wird zu dieser Umsetzung ein digitales Filter verwendet, dessen Koeffizient in Abhängigkeit von dem Verhältnis der Abtastraten gebildet werden.

Vorteile der Erfindung

Der erfindungsgemäße Rundfunkempfänger für den Empfang von digitalen Rundfunksignalen bzw. das erfindungsgemäße Verfahren zum Empfang von digitalen Rundfunksignalen mit den Merkmalen der unabhängigen Patentansprüche hat demgegenüber den Vorteil, mittels einer digitalen Abtastratenumsetzung im Empfänger die Audiosignale von der Sender- auf die Empfängerabtastrate umzusetzen. Damit wird das Vorhandensein von zu vielen oder zu wenig Abtastwerten vermieden.

Dazu wird vorteilhafterweise ein Festfrequenzoszillator verwendet, der günstig und einfach gestaltet ist und der gleichzeitig für die Frequenzerzeugung für das analoge Frontend, das Hochfrequenzempfangsteil, verwendet werden kann. Ein Festfrequenzoszillator benötigt keine aufwendige Kalibrierung wie ein spannungsgesteuerter Oszillator.

Es ist von Vorteil, dass die gepufferten digitalen Audiosignale einer Sollwertregelung unterzogen werden, um eine Abtastratenanpassung vorzunehmen.

Der digitale asynchrone Abtastratenumsetzer ist so gestaltet, dass er einen Eingangspuffer, eine Steuerung, einen Koeffizientenspeicher und einen Akkumulator sowie einer Interpolator aufweist, so dass durch einfache und damit schnelle Hardwareschaltungen der erfindungsgemäße Rundfunkempfänger hergestellt wird.

Durch die in den abhängigen Ansprüchen aufgeführten Maßnahmen und Weiterbildungen sind vorteilhafte Verbesserungen des in den unabhängigen Patentansprüchen angegebenen Rundfunkempfängers bzw. Verfahrens möglich.

Zeichnung

Ausführungsbeispiele der Erfindung sind in der Zeichnung dargestellt und werden in der nachfolgenden Beschreibung näher erläutert. Es zeigt Figur 1 ein Blockschaltbild des erfindungsgemäßen Rundfunkempfängers, Figur 2 ein weiteres Blockschaltbild des erfindungsgemäßen Rundfunkempfängers und Figur 3 ein Flußdiagramm des erfindungsgemäßen Verfahrens zum Empfang von digitalen Rundfunksignalen.

Beschreibung

Bei digitalen Rundfunksystemen ist die Synchronisation der digitalen Audiosignale des Empfängers auf den Sender notwendig, um eine fehlerfreie Wiedergabe der Audiosignale zu gewährleisten. Das ist insbesondere der Fall bei drahtloser digitaler Datenübertragung, wie sie für die Rundfunksysteme DAB (Digital Audio Broadcasting) und DRM (Digital Radio Mondial) verwendet wird. Beim erfindungsgemäßen Verfahren erfolgt die Synchronisation rein digital und die Audiosignale werden ebenfalls digital von der Sender- auf die Empfängerabtastrate umgesetzt.

DAB und DRM sind digitale Rundfunkübertragungsverfahren, die jeweils den orthogonalen Frequenzmultiplex zur Übertragung nutzen. Die Übertragung der Daten erfolgt in Rahmen, wobei neben digitalen Audiodaten auch andere Daten wie Multimediadaten übertragen werden können. Für die Audiodaten wird sowohl eine Quellenkodierung zur Datenreduktion als auch eine Kanalkodierung zum Fehlerschutz durchgeführt.

Durch Alterung und Temperatureinflüsse wird der Oszillator in einem Rundfunkempfänger in seiner Frequenz schwanken oder gar driften. Werden empfangene Audiosignale mit einer falschen Abtastrate abgetastet, kommt es entweder zu zuvielen Audiodaten oder zu zuwenig Audiodaten. Beide Situationen können zu hörbaren Fehlern führen.

Erfindungsgemäß wird daher ein Festfrequenzoszillator im erfindungsgemäßen Rundfunkempfänger verwendet, um dann mittels eines digitalen asynchronen Abtastratenumsetzers eine Taktregelung bei den empfangenen digitalen Rundfunksignalen oder eine Taktanpassung vorzunehmen. Die Taktanpassung kann auch bei digitalen Audiosignalen vorgenommen werden, die mittels eines Tonträgers wiedergegeben werden. Diese Taktregelung wird nach der Audiodekodierung der digitalen Audiosignale vorgenommen.

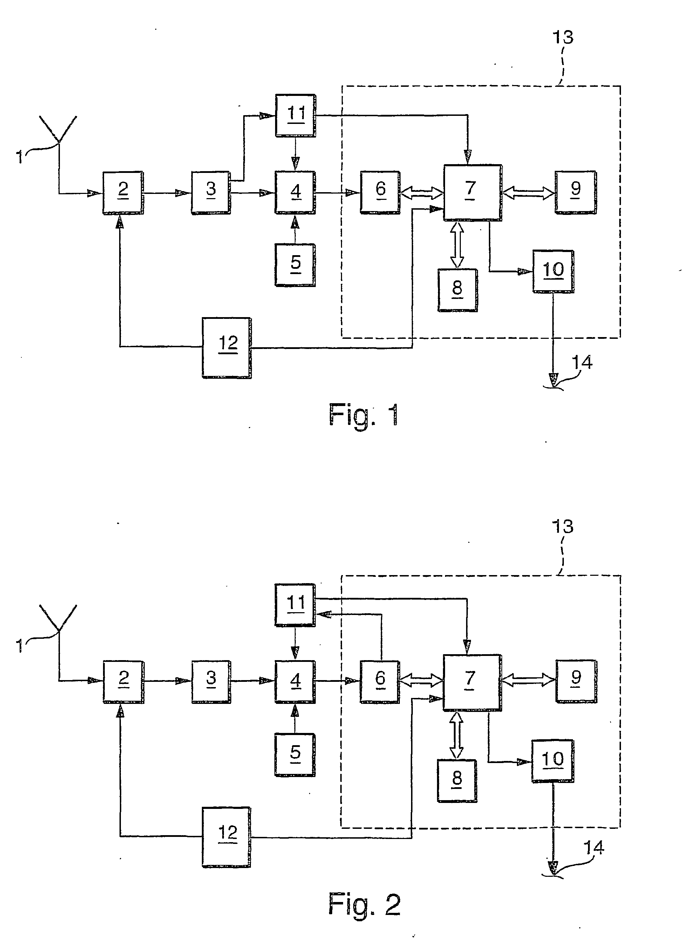

In Figur 1 ist der erfindungsgemäße Rundfunkempfänger zum Empfang von digitalen Rundfunksignalen als Blockschaltbild dargestellt. Hier wird die Taktregelung mittels des TFPR-Symbols (das Phasenreferenzsymbol) vorgenommen, da hier ein DAB-Rundfunkempfänger dargestellt wird.

Eine Antenne 1 zum Empfang der digitalen Rundfunksignale ist an einen ersten Eingang eines Hochfrequenzempfangsteils 2 (analoges Frontend) angeschlossen. An einen zweiten Eingang des Hochfrequenzempfangsteils 2 ist ein Festfrequenzoszillator 12 angeschlossen. An einen Ausgang des Hochfrequenzempfangsteils 2 ist ein Demodulator 3 angeschlossen.

Ein erster Datenausgang des Demodulators 3 führt zu einem ersten Dateneingang eines Schalters 4. Ein zweiter Datenausgang des Demodulators 3 führt zu einem Dateneingang eines Prozessors 11. An einen zweiten Dateneingang des Schalters 4 ist ein Abspielgerät für Tonträger 5 angeschlossen. An einen Steuereingang des Schalters 4 ist ein erster Datenausgang des Prozessors 11 angeschlossen. Ein zweiter Datenausgang des Prozessors 11 führt zu einem ersten Dateneingang einer Steuerung 7.

Ein Puffer 6, die Steuerung 7, ein Koeffizientenspeicher 8, ein Akkumulator 9 und ein Interpolator 10 bilden zusammen den asynchronen digitalen Abtastratenumsetzer 13. Ein Datenausgang des Schalters 4 führt zu dem Puffer 6. Der Puffer 6 ist über einen Datenein-/-ausgang mit einem ersten Datenein-/-ausgang der Steuerung 7 verbunden. Über einen zweiten Datenein-/-ausgang ist die Steuerung 7 mit dem Koeffizientenspeicher 8 verbunden. An einen zweiten Dateneingang der Steuerung 7 führt ein Signal vom zweiten Datenausgang des Festfrequenzoszillators 12. Ein dritter Datenein-/-ausgang der Steuerung 7 führt zu einem Dateneingang des Akkumulators 9. Ein Datenausgang der Steuerung 7 ist an einen Dateneingang des Interpolators 10 angeschlossen. Am Datenausgang des Interpolators 10 liegen die Ausgangssignale 14 des asynchronen digitalen Abtastratenumsetzers 13 vor.

Die mit der Antenne 1 empfangenen digitalen Rundfunksignale werden von dem Hochfrequenzempfangsteil 2 verstärkt, gefiltert und in eine niedrigere Zwischenfrequenz umgesetzt. Darüber hinaus werden dann die umgesetzten Rundfunksignale im Hochfrequenzempfangsteil 2 digitalisiert. Dies kann alternativ auch im Demodulator 3 als dem Digitalteil vorgenommen werden.

Der Demodulator 3 demoduliert die digitalen Rundfunksignale und führt eine Fehlerkorrektur anhand der Kanalcodierung durch. Darüber hinaus führt der Demodulator 3 die Quellendekodierung durch. Über seinen zweiten Datenausgang überträgt der Demodulator 3 die demodulierten Audiosignale zu dem Schalter 4. Der Schalter 4 schaltet entweder Audiosignale, die aus empfangenen Rundfunksignalen gewonnen wurden, oder Audiosignale, die von einem Tonträger stammen und damit mit dem Abspielgerät 5 erzeugt werden, zu dem digitalen asynchronen Abtastratenumsetzer 13 durch. Die Schaltung des Schalters 4 erfolgt über den Steuereingang durch den Prozessor 11. Der Prozessor 11 ist dabei mit einer Eingabevorrichtung verbunden, über die ein Benutzer angibt, ob er digitalen Rundfunk oder Tonträgersignale hören möchte.

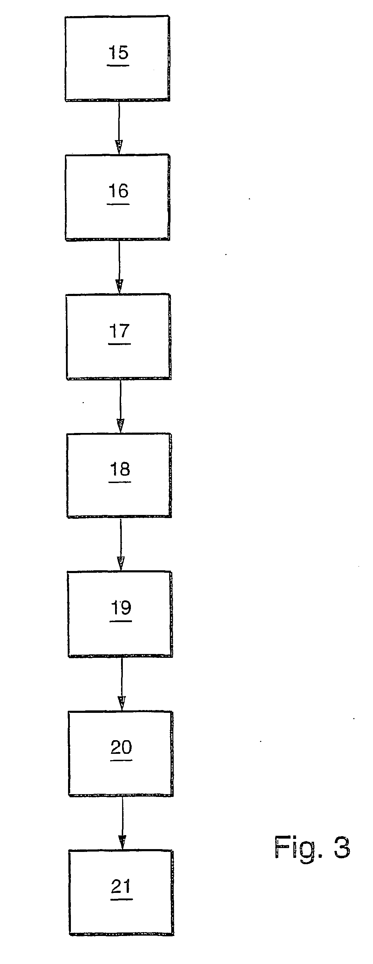

Der dritte Datenausgang des Demodulators 3 führt zu dem Prozessor 11. Damit wird bei DAB das TFPR-Symbol aus dem DAB-Rahmen dem Prozessor 11 übermittelt, so dass aus dem TFPR-Symbol der Prozessor 11 die Taktabweichung berechnen kann. Dies wird so durchgeführt, dass sich mittels des TFPR-Symbols die Zeitabweichung zwischen zwei Null-Symbolen im Sender und zwei Nullsymbolen im Empfänger bestimmen läßt. Der Abstand wird im Empfänger mittels eines Zählers, der mit dem Festfrequenzoszillator 12 gekoppelt ist, ermitteln. Mit Hilfe dieser Zeitabweichung läßt sich dann die Frequenzabweichung des Festfrequenzoszillators 12 berechnen, denn der zeitliche Abstand zwischen zwei Nullsymbolen ist vorgegeben, eine Abweichung zwischen dem gemessenen zeitlichen Abstand und dem vorgegebenen Abstand kann nur durch den Empfänger und damit durch den Festfrequenzoszillator 12 verursacht sein. Bei anderen digitalen Rundfunkübertragungsverfahren werden äquivalente Symbole zur Bestimmung der Taktabweichung verwendet. Alternativ kann der Pufferfüllstand des Puffers 6 zur Regelung herangezogen werden. Dies wird in Fig. 3 dargestellt.

Der vom Schalter 4 durchgeschaltete Audiodatenstrom zum Eingangspuffer 6 des asynchronen digitalen Abtastratenumsetzers 13 wird im Eingangspuffer 6 zunächst zwischengespeichert. Die Steuerung 7 wählt aus dem Koeffizientenspeicher 8 einen Koeffizientensatz und dazu Audiodaten aus dem Puffer 6 aus. Damit werden dann die Ausgangswerte berechnet. Die Länge des Koeffizientensatzes bestimmt die Anzahl der Audiodaten, die aus dem Puffer 6 genommen werden.

Mittels des Akkumulators 9 wird dabei ein Koeffizientensatz und ein Interpolationsfaktor für die lineare Interpolation bestimmt. Diese Interpolation wird dann mittels des Interpolators 10 durchgeführt. Der Akkumulator 9 wird bei der Berechnung eines Ausgangswertes um einen Wert, der sich aus der Regelung ergibt, inkrementiert. Dies nennt man einen digitalen Oszillator oder englisch numerically controlled oscillator. Dieser Wert wird dann von der Steuerung 7 dem Interpolator 10 übergeben. Bei der Umsetzung von der Frequenz $F_{in}$ nach

$F_{out}$ ergibt sich im Mittel folgender Wert S für den Akkumulator-Offset, wobei N die Akkumulatorbreite indiziert.

$$S = 2^N \cdot \left( \frac{F_{in}}{F_{out}} \right)$$

Die Interpolation teilt sich in zwei Schritte auf. Insgesamt lassen sich zwischen zwei Eingangswerten $2^N$ Stützstellen berechnen. $2^1$ Stützstellen lassen sich direkt mit Hilfe der Polyphasen also der Filterkoeffizienten ausrechnen. Liegt die zu berechnende Stützstelle zwischen zwei Polyphasen, wird eine lineare Interpolation durchgeführt. Der Interpolationsfaktor hat dann die Wortbreite $2^{N-1}$.

Die Filterkoeffizienten, die aus dem Koeffizientenspeicher 8 geladen werden, können unter Berücksichtigung der linearen Interpolation optimiert werden, so dass ein optimaler Signal-zu-Rausch-Abstand bei minimaler Filterlänge des asynchronen digitalen Abtastratenumsetzers erreicht wird. Die Koeffizienten werden derart optimiert, dass der mittlere quadratische Fehler zwischen dem interpolierten kontinuierlichen Signal und dem idealen Ausgangssignal über einen vorgegebenen Frequenzbereich minimiert wird. Diese Optimierung wird vor dem Betrieb des erfindungsgemäßen Rundfunkempfängers vorgenommen. Interpolationen höherer Ordnung können verwendet werden, um die Anzahl der Filterkoeffizienten zu reduzieren, wobei die gleiche Genauigkeit erzielt wird. Dies bedeutet einen höheren Rechenaufwand.

Der Interpolator 10 berechnet für jeden Ausgangswert zwei Filterwerte, wobei der Ausgangswert dann durch eine lineare Interpolation der Polyphasenergebnisse berechnet wird. Die Ausgangswerte 14 werden dann entweder mittels eines Digital-/Analog-Umsetzers in analoge Audiosignale umgewandelt, um dann mittels eines Audioverstärkers verstärkt zu werden und schließlich mittels eines Lautsprechers oder eines Lautsprechersystems akustisch wiedergegeben zu werden. Alternativ ist es möglich, dass die digitalen Ausgangssignale des asynchronen digitalen Abtastratenumsetzers 13 auf einen Multimediabus übertragen werden, um dann zu einer akustischen Wiedergabeeinheit oder einem Computer oder einem Speicher übertragen zu werden. Dabei ist es dann notwendig, dass der digitale asynchrone Abtastratenumsetzer 13 die Audiosignale auf den Takt des Multimediabusses umsetzt. Dieser Wert ist dann der Steuerung 7 beispielsweise durch den Prozessor 11 vorgegeben. Mittels des Festfrequenzoszillators 12 wird die notwendige Frequenz für die Umsetzung abgeleitet. Dies wird durch Teilen der Frequenz erreicht.

Der Festfrequenzoszillator 12 stellt sowohl für den Hochfrequenzempfangsteil 2 als auch für den Abtastratenumsetzer 13 die Frequenz zur Verfügung.

In Fig. 2 ist ein zweites Blockschaltbild des erfindungsgemäßen Rundfunkempfängers für digitale Rundfunksignale dargestellt. Hier wird die Anpassung an den Takt des Empfängers durch die Regelung des Eingangspuffers 6 durchgeführt.

Die Antenne 1 ist an den ersten Eingang des Hochfrequenzempfangsteils 2 angeschlossen. An den zweiten Eingang des Hochfrequenzempfangsteils 2 ist der Festfrequenzoszillator 12 angeschlossen. An den Ausgang des Hochfrequenzempfangsteils 2 ist der Demodulator 3 angeschlossen. Der Datenausgang des Demodulators 3 führt zum ersten Dateneingang des Schalters 4. An den zweiten Eingang des Schalters 4 ist das Abspielgerät für Tonträger 5 angeschlossen. An den Steuereingang des Schalters 4 ist der erste Datenausgang des Prozessors 11 angeschlossen. Der Datenausgang des Schalters 4 führt zu dem Eingangspuffer 6. Der Eingangspuffer 6, die Steuerung 7, der Koeffizientenspeicher 8, der Akkumulator 9 und der Interpolator 10 sind die Komponenten des digitalen asynchronen Abtastratenumsetzers 13.

Ein Dateneingang des Prozessors 11 ist mit einem Datenausgang des Eingangspuffers 6 verbunden, um den Pufferfüllstand zu ermitteln. Der zweite Datenausgang des Prozessors 11 führt zum ersten Dateneingang der Steuerung 7. Der Eingangspuffer 6 ist mit dem ersten Datenein-/-ausgang der Steuerung 7 verbunden. Der Festfrequenzoszillator 12 ist an den ersten Dateneingang der Steuerung 7 angeschlossen. An den zweiten Datenein-/-ausgang der Steuerung 7 ist der Koeffizientenspeicher 8 angeschlossen. An den dritten Datenein-/-ausgang der Steuerung 7 ist der Akkumulator 9 angeschlossen. An den Datenausgang der Steuerung 7 ist der Interpolator 10 angeschlossen. Die Ausgangsdaten des Interpolators 10 führen an den Ausgang 14 des Abtastratenumsetzers 13, an den, wie oben dargestellt, entweder ein Multimediabus oder ein Digital-Analog-Wandler angeschlossen ist.

Die Funktionsweise der Komponenten der Rundfunkempfängers ist, wie es für Fig. 1 beschrieben wurde, bis auf die Regelung der Abtastrate.

Die Regelung des Eingangspuffers 6 und damit der Abtastrate erfolgt, indem der Eingangspufferfüllstand, der Istwert, als Regelgröße vom Prozessor 11 herangezogen wird. Diese wird dabei auf einen Sollwert geregelt, indem von der Steuerung 7 Daten aus dem Eingangspuffer 6 entnommen werden. Mit Hilfe eines digitalen Reglers erster Ordnung kann ein neuer Wert für den Akkumulator 9 in geeigneten Zeitabständen berechnet werden. Diese Regelung wird durchgeführt, wenn die Frequenzabweichung nicht mittels des TFPR-Symbols oder eines anderen Synchronisationssymbols berechnet wird.

Die Koeffizienten der Regelung können so eingestellt werden, dass der asymptotische Grenzfall erreicht wird, um eine optimale Regelung mit minimalen Ausgleichsvorgängen zu erzielen. Dabei kann die Regelung sowohl in Hardware als auch in Software implementiert werden. Hier ist die Regelung in Software implementiert, die auf dem Prozessor 11 läuft. Alternativ ist es möglich, den Regelalgorithmus in Hardware auszuführen.

In Figur 3 ist als Flußdiagramm das erfindungsgemäße Verfahren zum Empfang von digitalen Rundfunksignalen dargestellt. In Verfahrensschritt 15 werden die digitalen Rundfunksignale empfangen. In Verfahrensschritt 16 werden die empfangenen Rundfunksignale verstärkt, gefiltert, auf eine Zwischenfrequenz umgesetzt und digitalisiert. In Verfahrensschritt 17 werden die Rundfunksignale dann demoduliert, der Kanaldekodierung und Quellendekodierung unterzogen. In Verfahrensschritt 18 wird die Taktabweichung zwischen den empfangenen Rundfunksignalen und der Frequenz des Festfrequenzoszillators bestimmt. In Verfahrensschritt 19 wird mittels des asynchronen digitalen Abtastratenumsetzers 13 diese Taktabweichung korrigiert. In Verfahrensschritt 20 werden die Ausgangswerte des digitalen asynchronen Abtastratenumsetzers 13 ausgegeben. In Verfahrensschritt 21 werden dann schließlich die decodierten Audiosignale in analoge Audiosignale umgewandelt, verstärkt und akustisch wiedergegeben. Alternativ ist hier möglich, die umgesetzten Audiodaten auf einen Multimediabus umzusetzen, beispielsweise den MOST-Bus.

Alternativ ist es dabei möglich, dass anstatt empfangener Rundfunksignale auch Signale von digitalen Tonträgern verwendet werden können. Die Taktabweichung kann durch eine Sollwerteinstellung oder bei DAB durch die Auswertung des TFPR-Symbols oder durch einen vorgegebenen Taktwert bestimmt werden.

## Patentansprüche

1.  Rundfunkempfänger für den Empfang von digitalen Rundfunksignalen, wobei der Rundfunkempfänger einen Demodulator (3) zur Demodulation der digitalen Rundfunksignale und zur Ermittlung von digitalen Audiosignalen aufweist, wobei der Runbfunkempfänger einen Festfrequenzoszillator (12) und einen digitalen asynchronen Abtastratenumsetzer (13) aufweist, wobei der digitale asynchrone Abtastratenumsetzer (13) die Taktabweichung zwischen den gesendeten digitalen Audiosignalen und dem Festfrequenzoszillator (12) ausgleicht, bevor die digitalen Audiosignale wiedergegeben werden, wobei der digitale asynchrone Abtastratenumsetzer (13) einen Eingangspuffer (6), eine Steuerung (7), einen Koeffizientenspeicher (8) und einen Akkumulator (9) sowie einen Interpolator (10) aufweist, wobei der Ausgleich der Taktabweichung derart erfolgt, dass ein Eingangspufferfüllstand als ein Istwert auf einen Sollwert geregelt wird.

2.  Rundfunkempfänger nach Anspruch 1, **dadurch gekennzeichnet, dass** der digitale asynchrone Abtastratenumsetzer (13) mit einem Multimediabus verbunden ist.

3.  Rundfunkempfänger nach Anspruch 1 oder 2, **dadurch gekennzeichnet, dass** ein Eingang des digitalen asynchronen Abtastratenumsetzers (13) mit einem Ausgang von wenigstens einer Vorrichtung zur Wiedergabe von Tonträgern verbunden ist.

4.  Verfahren zum Empfang von digitalen Rundfunksignalen, wobei die Rundfunksignale demoduliert werden, wobei aus den demodulierten Rundfunksignalen digitale Audiosignale ermittelt werden, wobei die digitalen Audiosignale decodiert, verstärkt und akustisch wiedergegeben werden, wobei die Taktabweichung zwischen den empfangenen digitalen Audiosignalen und der Frequenz eines Festfrequenzoszillators (12) durch eine digitale asynchrone Abtastratenumsetzung, welche einen Eingangspüffer (6) umfaßt, an den empfangenen digitalen Audiosignalen ausgeglichen wird, bevor die digitalen Audiosignale verstärkt und akustisch wiedergegeben werden, wobei eine Anzahl von gepufferten digitalen Audiosignalen auf einen Sollwert geregelt wird, indem ein Eingangspufferfüllstand als ein Istwert herangezogen wird.

## Claims

1.  Broadcast radio receiver for receiving digital broadcast radio signals, the broadcast radio receiver having a demodulator (3) for demodulating the digital broadcast radio signals and for determining digital audio signals, the broadcast radio receiver having a fixed-frequency oscillator (12) and a digital asynchronous sampling rate converter (13), the digital asynchronous sampling rate converter (13) compensating for the clock discrepancy between the transmitted digital audio signals and the fixed-frequency oscillator (12) before the digital audio signals are reproduced, the digital asynchronous sampling rate converter (13) having an input buffer (6), a controller (7), a coefficient memory (8) and an accumulator (9) as well as an interpolator (10), the clock discrepancy being compensated for in such a manner that an input buffer filling level as an actual value is regulated to a desired value.

2.  Broadcast radio receiver according to Claim 1, **characterized in that** the digital asynchronous sampling rate converter (13) is connected to a multimedia bus.

3.  Broadcast radio receiver according to Claim 1 or 2, **characterized in that** an input of the digital asynchronous sampling rate converter (13) is connected to an output of at least one apparatus for reproducing sound carriers.

4.  Method for receiving digital broadcast radio signals, the broadcast radio signals being demodulated, the demodulated broadcast radio signals being used to determine digital audio signals, the digital audio signals being decoded, amplified and acoustically reproduced, the clock discrepancy between the received digital audio signals and the frequency of a fixed-frequency oscillator (12) being compensated for by means of a digital asynchronous sampling rate conversion, which comprises an input buffer (6), on the received digital audio signals before the digital audio signals are amplified and acoustically reproduced, a number of buffered digital audio signals being regulated to a desired value by using an input buffer filling level as an actual value.

**Revendications**

1. Récepteur de radiodiffusion servant à recevoir des signaux numériques de radiodiffusion, le récepteur de radiodiffusion présentant un démodulateur (3) qui démodule les signaux numériques de radiodiffusion et qui détermine des signaux audio numériques, le récepteur de radiodiffusion présentant un oscillateur (12) à fréquence fixe et un convertisseur numérique asynchrone (13) de taux d'échantillonnage, le convertisseur numérique asynchrone (13) de taux d'échantillonnage compensant l'écart de taux entre les signaux audio numériques émis et l'oscillateur (12) à fréquence fixe avant la reproduction des signaux audio numériques, le convertisseur numérique asynchrone (13) de taux d'échantillonnage présentant un tampon d'entrée (6), une commande (7), une mémoire (8) à coefficients et un accumulateur (9) ainsi qu'un interpolateur (10), la compensation de l'écart de taux s'effectuant en régulant à une valeur de consigne l'état de remplissage du tampon d'entrée, valeur effective.

2. Récepteur de radiodiffusion selon la revendication 1, **caractérisé en ce que** le convertisseur numérique asynchrone (13) de taux d'échantillonnage est relié à un bus multimédia.

3. Récepteur de radiodiffusion selon les revendications 1 ou 2, **caractérisé en ce qu'**une entrée du convertisseur numérique asynchrone (13) de taux d'échantillonnage est relié à une sortie d'au moins un dispositif de reproduction des porteuses de son.

4. Procédé de réception de signaux numériques de radiodiffusion, dans lequel les signaux numériques de radiodiffusion sont démodulés, des signaux audio numériques étant déterminés à partir des signaux de radiodiffusion démodulés, les signaux audio numériques étant reproduits acoustiquement après avoir été décodés et amplifiés, l'écart de taux entre les signaux audio numériques reçus et la fréquence fixe d'un oscillateur (12) étant compensé par une conversion numérique asynchrone des taux d'échantillonnage qui comporte un tampon d'entrée (6) avant que les signaux audio numériques soient amplifiés et reproduits acoustiquement, le nombre des signaux audio numériques étant régulé à une valeur de consigne en utilisant comme valeur effective l'état de remplissage du tampon d'entrée.

Fig. 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1096716 A2
- EP 1096715 A2
- EP 401562 A2